(19) **Europäisches Patentamt**

**European Patent Office**

**Office européen des brevets**

(11) **EP 0 742 359 B1**

(12) **EUROPEAN PATENT SPECIFICATION**

(45) Date of publication and mention
of the grant of the patent:
**17.04.2002 Bulletin 2002/16**

(51) Int Cl.⁷: **F02D 35/02**

(21) Application number: **96107609.8**

(22) Date of filing: **13.05.1996**

(54) **Method and apparatus for controlling the operation of an internal combustion engine**

Verfahren und Vorrichtung zur Steuerung des Betriebs einer Brennkraftmaschine

Méthode et dispositif pour commander le fonctionnement d'un moteur à combustion interne

(84) Designated Contracting States:
**DE FR GB IT**

(30) Priority: **12.05.1995 JP 11428295**
**17.05.1995 JP 11838995**

(43) Date of publication of application:
**13.11.1996 Bulletin 1996/46**

(73) Proprietor: **YAMAHA HATSUDOKI KABUSHIKI
KAISHA**
**Iwata-shi Shizuoka-ken, 438 (JP)**

(72) Inventors:
• **Nakamura, Michihisa,**
c/o Yamaha Hatsudoki K.K.
Iwata-shi, Shizuoka-ken (JP)

• **Maebashi, Kousei, c/o Yamaha Hatsudoki K.K.**
**Iwata-shi, Shizuoka-ken (JP)**
• **Matsuo, Noritaka, c/o Yamaha Hatsudoki K.K.**
**Iwata-shi, Shizuoka-ken (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**EP-A- 0 370 594**         **US-A- 4 905 649**
**US-A- 5 101 788**         **US-A- 5 116 356**
**US-A- 5 359 975**

## Description

The present invention relates to a method of controlling the operation of an internal combustion engine on the basis of at least one detected combustion chamber pressure, wherein at least a combustion chamber pressure is detected at a crank angle between the end of an exhaust stroke and the beginning of the compression stroke of a piston, and/or at crank angles close to or at a top dead center position of the piston, and at crank angles after said top dead center position and before the beginning of the successive exhaust stroke of said piston, using said combustion chamber pressure data for controlling the engine operation, and to an internal combustion engine comprising at least one cylinder unit accommodating a slidingly reciprocatable piston connected to a crankshaft, an engine speed detector, a crank angle detector and a combustion chamber pressure detector.

Such a method or internal combustion engine is known from EP-A-0 370 594.

Combustion tends to be affected in cases where lean burning or EGR (exhaust gas recirculation) is used in engines for purposes related to improving fuel economy or exhaust emissions. At this time, unstable combustion can cause large fluctuations in output which adversely affects drivability. Technology is known to the art that controls the air/fuel ratio or the amount of EGR on the basis of computing the engine's shaft torque, or the corresponding PMI (indicated mean effective pressure). A torque fluctuation control device involved in this prior art technology is disclosed in Japan Patent Application Disclosure Hei 4-214947 (1992). The control device disclosed in this Application detects the combustion pressure at a specific detection timing for each of the cylinders and then computes the shaft torque based upon the detected values. In this case a detection signal from the crank angle detector is used to detect combustion pressure at five crank angles: (1) BTDC 155 degrees CA (155 degrees before the upper dead center crank angle), (2) ATDC 5 degrees CA (5 degrees after top dead center crank angle), (3) ATDC 20 degrees CA, (4) ATDC 35 degrees CA, and (5) ATDC 50 degrees CA, and the shaft torque was computed based upon these detected values. In this case, the (1) BTDC 155 degrees CA (CA = crank angle) combustion pressure signal absorbed some of the fluctuations and was used as the base value, so that, essentially, this is the basis for the computation of the shaft torque for each cylinder at each of the four crank angles (2) through (5).

## Problems To Be Resolved by this Invention

However, because the combustion for each cycle begins before the top dead center (BTDC), the combustion pressure works upon the piston as a load. Because of this, if the shaft torque is computed essentially only from the combustion pressure ATDC (after top dead center) as In the above cited application, then the computed values will be significantly higher than the actual torque value generated. Further, even if we suppose that the pressure change inside the combustion chamber before the top dead center and after the top dead center remains constant, the combustion state would change in spark ignition engines according to the ignition timing, the amount of fuel, and the air/fuel ratio. In diesel engines, which are ignited by compression, the combustion state is affected by the timing of the fuel injection, the amount of fuel injected, the fuel injection pressure, and the air/fuel ratio. Because of this, if the combustion pressure after top dead center is solely used in computing the shaft torque, it is not possible to account for any changes in the work load before top dead center that is caused by a variety of combustion conditions, and accordingly, it is impossible to accurately compute the shaft torque. For example, if EGR is being performed when a highly lean air/fuel ratio is being used for combustion, fluctuations in combustion are prone to occur among the combustion cycles; this makes the work load before top dead center prone to fluctuation as well. Accordingly, if the engine is controlled based on this shaft torque, it is difficult to implement accurate control of the ignition timing or of the air/fuel ratio. In particular, when EGR is being performed, the lean-burn type of combustion method can cause large variations in output over each combustion cycle.

When the air/fuel ratio and the amount of EGR (exhaust gas recirculation) are controlled to maximize output based on the indicated mean pressure, there are cases where the combustion takes place too quickly and the $NO_x$ emissions in the exhaust increase, or, when a stable combustion state cannot be obtained, result in fluctuating RPM, etc., that method is not always appropriate from the perspectives of obtaining combustion that has lower exhaust emissions and more stable combustion.

Moreover, with the above-mentioned prior art there are problems to sufficiently control the combustion ratio.

Accordingly, it is an objective of the present invention to provide an improved method of controlling the operation of an internal combustion engine as indicated above as well as an improved internal combustion engine as indicated above which facilitate the use of parameters calculated on the basis of detected engine operating conditions which are as close as possible to actual parameters for controlling the operation of said internal combustion engine.

According to the invention, this objective is solved for a method as indicated above in that the actual combustion rate is calculated on the basis of said combustion chamber pressures and that this value is used as a control parameter to match a predetermined target combustion rate by using feedback control.

According to the invention, this objective is solved for an internal combustion engine comprising at least one cylinder unit accommodating a slidingly reciprocable piston connected to a crankshaft, an engine speed detector, a crank angle detector and a combustion chamber pressure detector, in particular for performing the method of claim 1, wherein a control device which, based on the supplied signals of said various detectors, is capable of calculating the control steps for the ignition timing and fuel injection by calculating the combustion rate and/or the indicated mean effective pressure (PMI) on the basis of a combustion chamber pressure detected at a crank angle between the end of an exhaust stroke and the beginning of the compression stroke of a piston, and/or at crank angles close to or at a top dead center position of the piston, and at crank angles after said top dead center position and before the beginning of the successive exhaust stroke of said piston and using said combustion chamber pressure data for controlling the engine operation, said control device being further capable to calculate the actual combustion rate on the basis of said combustion chamber pressures and that this value is used as a control parameter to watch a predetermined target combustion rate by using feedback control.

According to preferred embodiments of the invention, said combustion chamber pressure data may be used to calculate the engine output in terms of the indicated mean effective pressure and/or to calculate the combustion rate at the top dead center position of a specific crank angle close to said top dead center position.

According to the invention, said indicated mean effective pressure may be calculated by the use of the following approximation equation:

$$PMI = c + \sum_{1-n} cn(Pn-PO)$$

whereas the combustion rate may be either calculated by use of the approximation equation:

$$qx = b + \sum_{1-n} bn\ (Pn-PO)$$

or by use of the equation:

$$qx = \sum_{1-x} Qx / \sum_{1-n} Q_n\ .100$$

According to another embodiment of the present invention, said combustion chamber pressures are detected at at least six different crank angles, whereby the first may be the crank angle when the piston is at its bottom dead center position, the second may be a crank angle after the ignition but before the top dead center position of said piston and the third through sixth may be crank angles at the top dead center position within the power stroke of said piston.

Other preferred embodiments of the present invention are laid down in further dependent claims.

In order to compute the PMI, it is necessary to detect the combustion chamber pressure at a crank angle between the end of the exhaust stroke and the beginning of the compression stroke, further in the vicinity of the top dead center of the compression stroke and prior to the top dead center, and between the compression stroke and the expansion stroke in the area of the top dead center, but after the top dead center. In this case, what is meant by the crank angle that lies between the end of the exhaust stroke and the beginning of the compression stroke is the crank angle at which pressure inside the combustion chamber has reached its lowest level, approaching atmospheric pressure, for example at or near the bottom dead center. To wit, in four- stroke cycle engines after firing, the exhaust stroke which begins from bottom dead center causes the combustion gases inside the combustion chamber to be exhausted until the area of the top dead center where the pressure in the combustion chamber has dropped to near atmospheric pressure. In the intake stroke just past top dead center, the pressure is maintained at near-atmospheric levels as the fresh air is being introduced. Just past the bottom dead center, the pressure begins to gradually increase in the compression stroke. Thus, the pressure inside the combustion chamber needs to be detected at one point which is within the range where the pressure inside the combustion chamber is at its lowest level, near atmospheric pressure. On the other hand, in two-cycle engines, after firing, the piston descends and the pressure declines, and then as the exhaust port is opened, the pressure inside the combustion chamber drops further. When the scavenging port is opened, new air is introduced from the crank chamber and the pressure is near atmospheric pressure. With the exhaust port remaining open at the lower dead point, the piston rises and the scavenging port is closed, followed by the closing of the exhaust port. The compression begins and the pressure begins gradually rising as a result. To wit, what is meant by "between the end of the exhaust stroke and the beginning of the compression stroke," is that interval after the exhaust port has been opened and exhausting has begun, from when the scavenging port is opened and after the air intake has begun, to the time when compression begins with the closing of the exhaust port.

After compression, the spark ignition takes place just before the piston reaches the top dead center. The pressure in the combustion chamber is detected before top dead center. Further, the pressure in the combustion chamber is again detected at the top dead center or thereafter, preferably at a plurality of points.

Thus, the pressure is detected at a plurality of points $n$ (for example 6 points) during each combustion cycle at a crank angle between the conclusion of the exhaust stroke and the beginning of the compression stroke, at a crank angle that is near but before the top dead center, and at crank angles near but after the top dead center. The PMI may be computed by the following first order approximation equation:

$$PMI = C + C1*(P1 - P0) + C2*(P2 - PO) + ... + Cn*(Pn - P0)$$

As can be seen from the above equation, the PMI is computed by multiplying a predetermined constant C as C1 through Cn by the pressure data P1 through Pn. Here, P0 is the point at which the combustion chamber pressure is at the atmospheric pressure level (which, is near the BDC crank angle as will be described below). In order to correct the offset output for center drift, etc., it is subtracted from the various pressure values P1 through Pn. P1 is the pressure in the combustion chamber at the crank angle which is near the top dead center but before the top dead center. P2 through Pn are combustion chamber pressures at the crank angles that are near the top dead center but after the top dead center. Thus, it is possible using a simple first order approximation equation to accurately compute in a short period of time a value that is approximately the actual value. Accordingly, this PMI can then be used to control the ignition timing for the engine or the air/fuel ratio to improve engine response and to inhibit output fluctuation by accurately following the operating state of engines when EGR is being performed under lean-burn combustion.

In the following, the present invention is explained in greater detail with respect to several embodiments thereof in conjunction with the accompanying drawings, wherein:

Figure 1 is a structural diagram of the present invention applied to a four-stroke cycle engine;
Figure 2 is a graph of the combustion chamber pressure in the engine of Figure 1;
Figure 3 is a main routine flow chart for the control of the engine of this invention;
Figure 4 is a sub-routine flow chart for the control of the engine of this invention;
Figure 5 is a structural diagram of the present invention applied to a two- stroke cycle engine;
Figure 6 is a graph of the combustion chamber pressure in the engine of Figure 5;
Figure 7a is another graph of the combustion chamber pressure illustrating one calculation example and Figure 7b shows a part of Fig. 7a illustrating an interpolation interval; and
Figure 8 shows a graph similar to Fig. 7a for another calculation example.

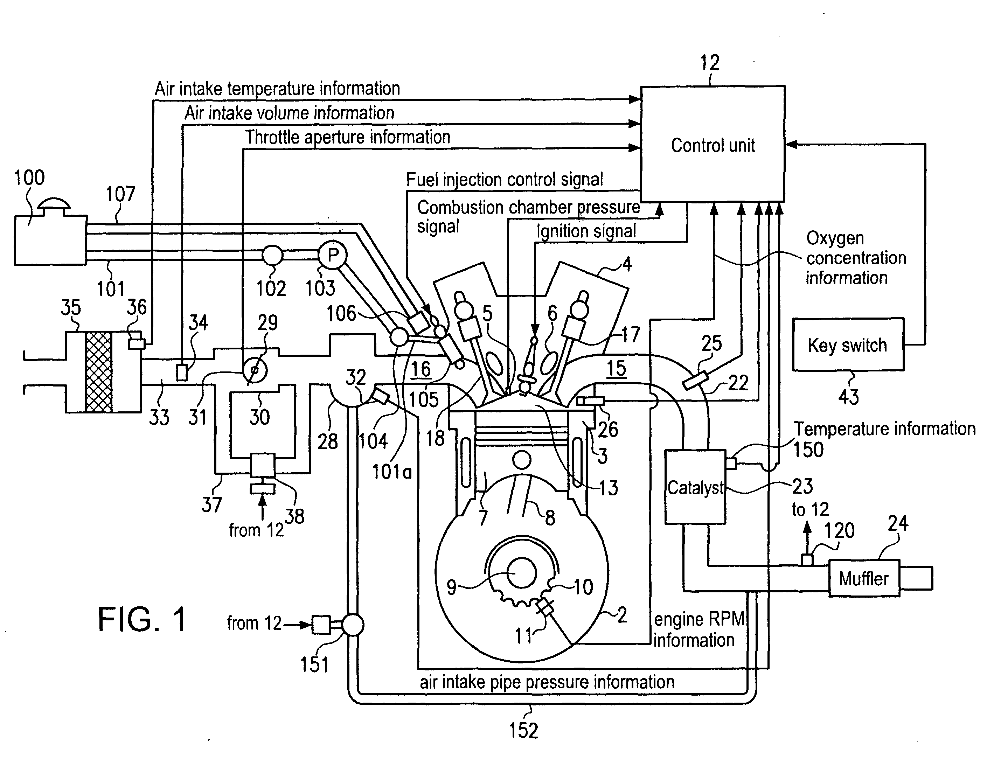

Figure 1 is a structural diagram of a multi-cylinder spark ignition four-stroke cycle engine to which the present invention has been adapted. This engine is composed of a crankcase 2, which has a cylinder unit 3 and a cylinder head 4 mounted upon it. The pistons 7 inside the cylinder unit 3 are movably installed by means of the connecting rods 8 which link them to the crankshaft 9. A *ring* gear 10 with a specific number of teeth is attached to the crankshaft 9. The ring gear is further equipped with a crank angle sensor 11 which doubles as an engine RPM sensor that detects the rotational position of the ring gear for the crank angle and which measures the RPM of the engine. The combustion chambers 13 are formed between the cylinder head 4 and the pistons 7. The combustion chamber pressure sensors 5 that detect the combustion chamber pressure inside these combustion chambers 13 are mounted on the cylinder head. A coolant jacket is formed on the cylinder head 4 and the cylinder body 3 in appropriate positions. The combustion chambers 13 have openings which connect to an exhaust passage 15 and air intake passage 16, and the exhaust valves 17 and air intake valves 18 are mounted respectively therein. A catalytic converter 23 containing a three element catalyst, etc. to cleanse the exhaust emissions is installed in the exhaust passage 15, and a muffler 24 is mounted on the end. Also installed in the exhaust passage 15 are an oxygen concentration sensor ($O_2$ sensor) 25 and an exhaust temperature sensor 120, and these are connected to the control unit 12.

Temperature sensors 26 that are mounted on the cylinder hend 4 provide temperature information regarding the combustion chambers 13 to the control unit 12. A catalyst temperature sensor 150 is also mounted on the catalytic converter 23, and it too is connected to the control unit 12. The control unit 12 also receives information on the commencement of engine-drive control from the engine key switch 43.

On the one hand, the air intake pipe 16 is connected by an air intake manifold 28 to the various cylinders. There is an air intake pressure sensor 32 mounted in the air intake manifold which sends information on the pressure in the air intake pipe to the control unit 12. There is also an EGR pipe 153 that connects this air intake manifold pipe 28 with the exhaust passage 15. An EGR adjustment valve 151 that is connected to the control unit 12 is mounted in this EGR pipe. The air intake manifold 28 is connected to the air cleaner 35 by means of an air intake passage 33. An air intake temperature sensor 36 is mounted in this air cleaner 35 and it sends information on the air intake temperature to the control unit 12. An air intake regulator 30 that includes a throttle valve 29 is also mounted in the air intake pipe 33. A throttle aperture sensor 31 is mounted on the throttle valve, and this throttle aperture sensor 31 is connected to the control unit 12. There is a throttle valve bypass passage 37 located in this air intake regulator 30 area of the air intake passage 33, and a bypass passage aperture adjustment valve 38 is mounted in this bypass passage 37. The bypass passage aperture adjustment valve 38 is connected to the control unit 12. There is a heat wave type of intake air flow sensor 34 mounted in the air intake passage 33 that sends air intake information to the control unit 12.

Injector valves 105 are mounted in the air intake passage 16 upstream of the air intake valves for the each of the cylinder's air intake ports. The injectors 105 are linked to the control unit 12 which sends them control signals on the optimal amount of fuel injection based upon the operating state of the engine. The fuel is sent to each of the injectors 105 by fuel lines 101a that connect at each cylinder. The fuel lines 101a branch off from a fuel distribution line 104 that is supplied with fuel from the fuel tank 100 by a fuel pump 103 through a fuel filter 102 installed in the fuel supply line 101. Fuel that is not injected by the injectors 105 is returned to the fuel tank 100 by means of the fuel return line 107. A regulator 106 is mounted in the fuel return line 107 that maintains a constant fuel injection pressure.

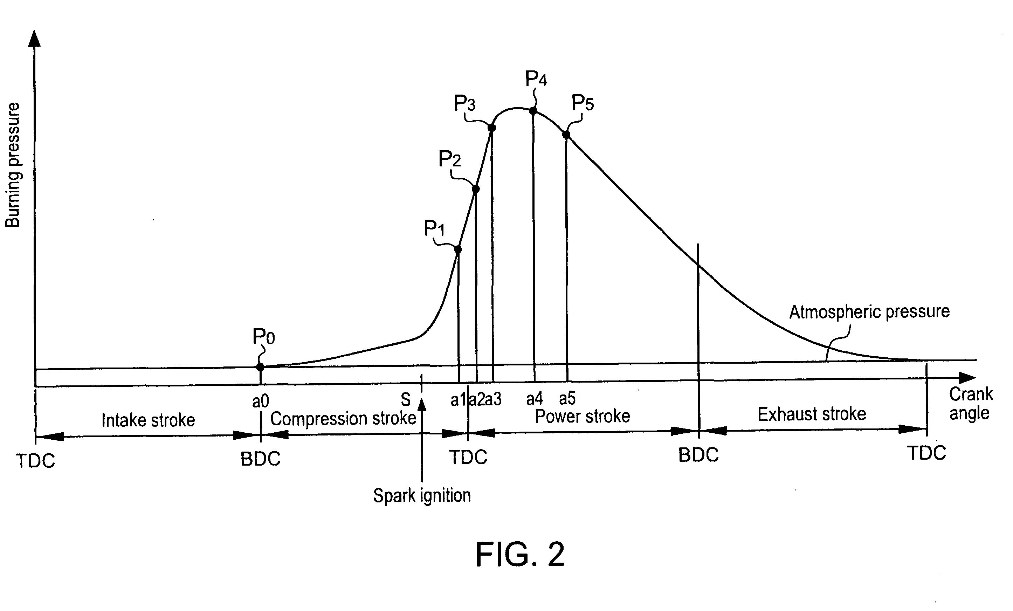

Figure 2 is a graph showing the combustion chamber pressure for one combustion cycle of the foregoing four stroke-cycle engine. The crank angle appears on the horizontal axis, while the combustion chamber pressure is shown on the vertical axis. In the present embodiment, the pressure in the combustion chamber P0 through P5 is detected at six points indicated in the graph at crank angles a0 through a5. These pressure values are the basis for computing the PMI (indicated mean effective pressure) and the combustion ratio. a0 is the bottom dead center position (BDC) where the intake makes the transition to compression, at which point the pressure is approximately the same as atmospheric pressure. a1 is, with respect to S, after the spark ignition, but at a crank angle before top dead center (TDC). The four points a2 through a5 are crank angles after top dead center that are inside the power stroke. The PMI and the combustion rates are computed as described below on the basis of this pressure data at these various points.

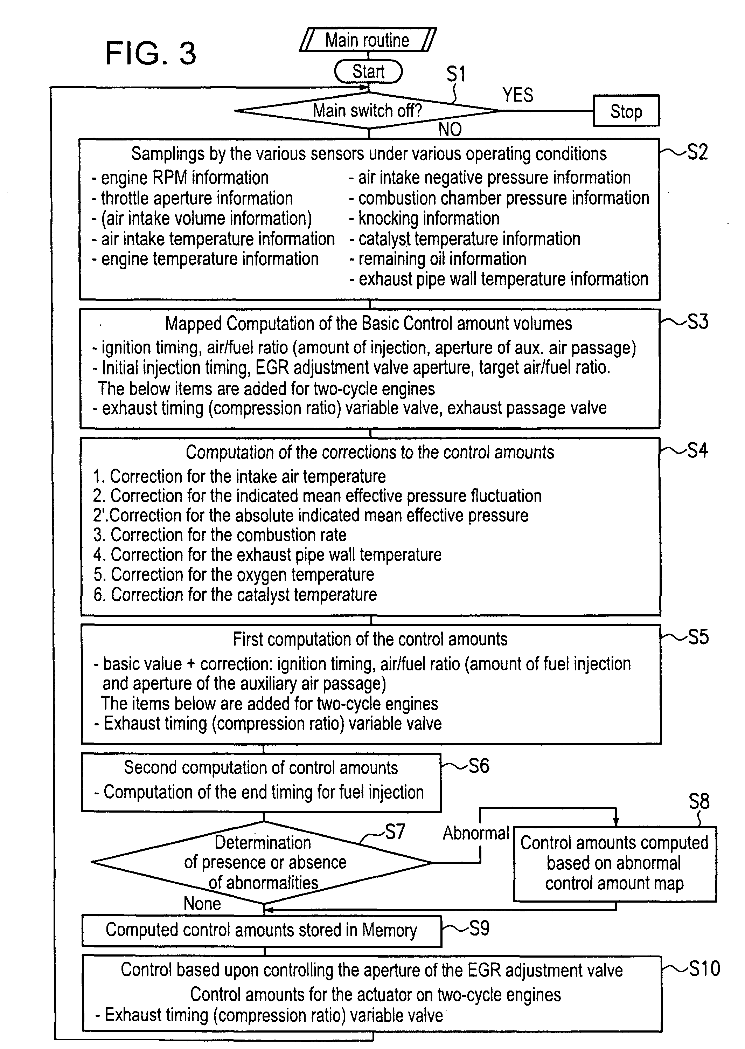

Figure 3 is a flow chart of the main routine used to control the various operational states of the engine, including the computation of the shaft torque and the combustion rates. The steps will be explained below.

Step S1: A determination is made as to whether or not the main switch has been turned off during engine operations to stop the engine. If the answer is YES, then the ignition device immediately halts ignition and the fuel injection. If the answer is NO, the routine proceeds to step S2.

Step S2: The information shown in the figure that is collected from the various sensors is stored as data in the memory. The engine load that is desired by the drive is determined based upon the accelerator position and the throttle aperture. Once the throttle aperture and the engine RPM have been determined, if operating at a constant level, then the amount of air intake is determined and accordingly the amount of air intake that is directly detected may be viewed as representing the engine load. Further, since the air intake negative pressure, once the engine RPM have been determined, has a constant relationship with the throttle aperture, the negative air intake pressure that is detected can also be regarded as representing the engine load.

Step S3: The ignition timing data, air/fuel ratio or fuel injection amount data, the fuel injection initiation data, the EGR adjustment valve aperture data are mapped three dimensionally into memory as they correspond to the two variables of the engine load, which are the accelerator position or the throttle aperture (or even the amount of air intake or the air intake negative pressure which is regarded as so-called engine load information), and the engine RPM. The engine load information and the throttle aperture information are used to directly map the ignition timing and the amount of fuel injection, and the values at which they are to be controlled, respectively, are computed therefrom. When the air/fuel ratio data is obtained as a three dimensional map, it is possible to compute the amount of fuel injection on the basis of the detected amount of air intake and the air/fuel ratio data.

The target combustion rate is also three dimensionally mapped in memory as a variable of so-called engine load and engine RPM.

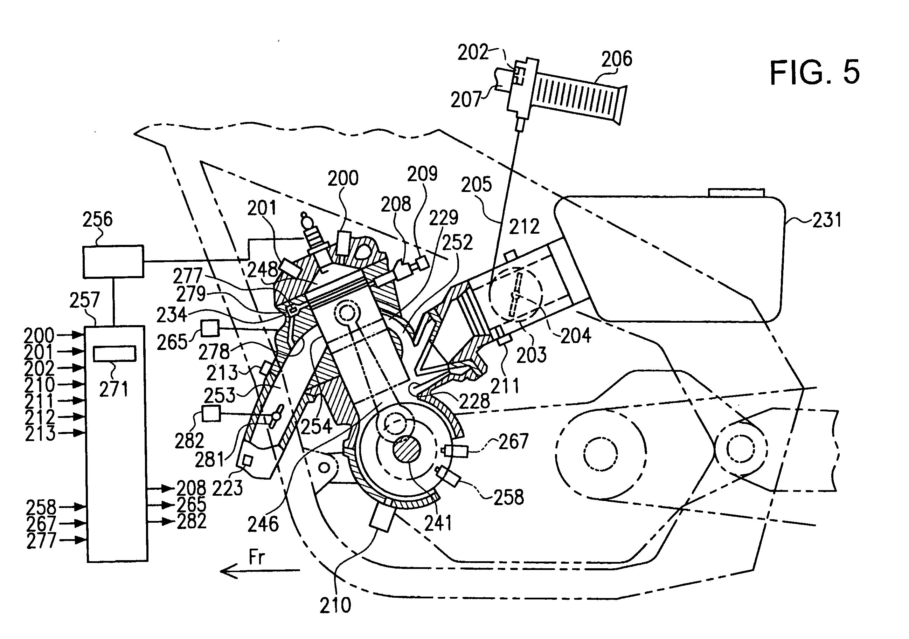

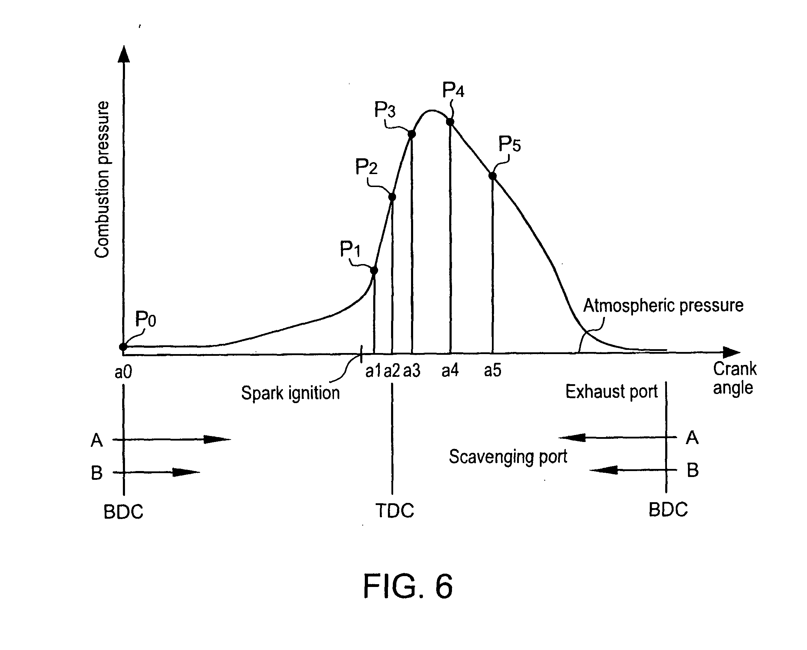

In two-cycle engines, (Figures 5 and 6), which will be described below, the three dimensional mapping to memory for the exhaust passage valve is also based on the two variables of engine load and engine RPM. That is, computations are made from the map based upon the engine load information and the engine RPM information. The exhaust timing (compression ratio) variable valve aperture is also two dimensionally mapped in memory with engine RPM as the variable; that is, computations are made from the map based on the engine RPM information.

Step S4: If the intake air is at a high temperature, its density is lower and the amount of air intake is essentially diminished. This would cause a lowering of the air/fuel ratio in the combustion chamber. Because of this, a correction has to be computed for reducing the amount of fuel injection. Or, since the combustion tends to be delayed, it is also possible to compute a correction which slightly advances the ignition timing.

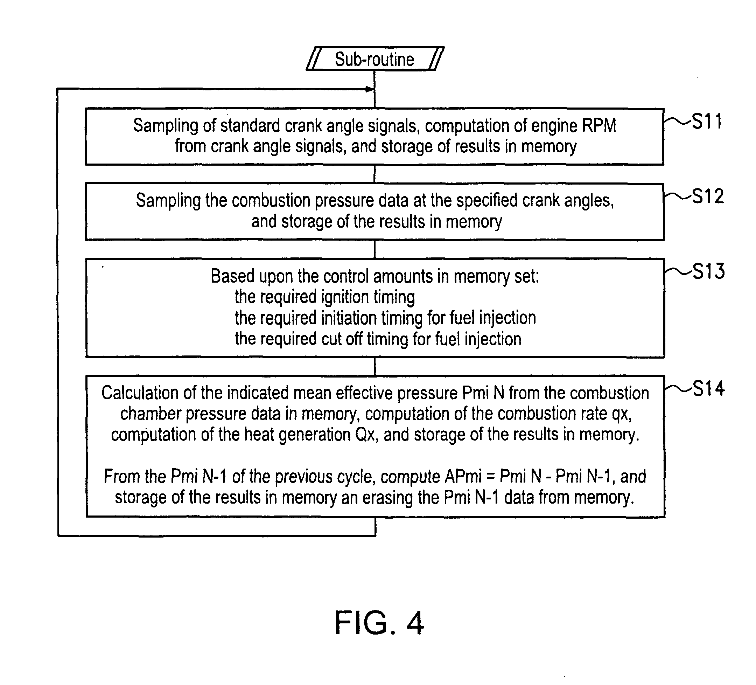

Also, the fluctuation correction for the indicated mean effective pressure is performed as described below. The fluctuation value subroutine (Figure 4) is such that when the amount of fluctuation exceeds a specified amount from the ΛPmi value, corrections are computed to increase the amount of fuel injection or to decrease the amount of EGR. This is because the more the fuel injection is increased, or the more the EGR is reduced, the lower are the output fluctuations. However, since increasing fuel injection or decreasing EGR causes fuel economy to suffer, feedback control using the absolute values for the indicated mean effective pressure can be advantageously performed. This correction for the absolute value of the indicated mean effective pressure can be performed as follows.

The indicated mean effective pressure is computed from the combustion chamber pressure information and stored into memory. In addition, a comparison is made with the indicated mean effective pressure that was memorized in the main routine for the previous cycle. If it has increased, then the various corrected values for the ignition timing, the amount of fuel injection and the amount of EGR are substituted for the previous values in memory, which are either slightly increased or decreased based on the correction.

On the other hand, if the indicated mean effective pressure has decreased over that of the previous cycle as recorded during main routine, then the required slight increases or decreases, which are opposite from those above, are performed and the new values are placed in memory.

Further, if there is no change, then the values for the ignition timing, amount of fuel injection, and EGR adjustment valve aperture are allowed to remain in memory, uncorrected.

The previous increase or decrease information In memory must be fed-in at the time the engine is started, and the indicated mean effective pressure in memory is set to zero at the engine startup.

Next, the combustion rate will be explained. Up to the point where the crank angle reaches TDC, the combustion rate is stable, for example, at 25 to 30%. To wit, the combustion rate computed from the combustion chamber pressure data is compared to the target combustion rate computed in the foregoing step S3, and based upon that difference, corrections are made to the control settings for such parameters as the ignition timing, the amount of fuel injection, the fuel injection timing, the aperture of the EGR adjustment valve, the timing of the exhaust timing valve in two-cycle engines, the variable compression valve or the exhaust passage valve.

The lower the combustion rate, compared to the target combustion rate, the more advance in the ignition timing, the advance in the fuel injection timing, and the increase in the fuel injection timing. Control would then be performed to advance the exhaust timing and to decrease the aperture of the exhaust passage valve. The advance of the timing of the fuel injection is primarily implemented in diesel engines.

On the other hand, the greater the combustion rate compared to the target combustion, the more those respective control corrections are performed in the direction opposite from that described above.

When the wall temperature on the inside the exhaust pipe is low, the temperature of the exhaust gases is lowered. In the case where the exhaust pipe pulse is utilized in two-stroke cycle engines, the low temperature of the wall slows the propagation of the pressure wave, and this makes it impossible to utilize the exhaust pipe pulse to improve engine output. However, the lower the temperature compared to the required temperature, a correction can be made by delaying the ignition timing, or by correcting the air/fuel ratio upward, for those cases when that ratio is below a certain level (below 17 or 18). This makes it possible to increase the exhaust gas temperature. When the temperature is higher than the required temperature, the higher that temperature the more the ignition is advanced or the more the air/fuel ratio is decreased to make the correction. The corrected amount of fuel injection can be computed from the corrected air/fuel ratio, or the setting value for the auxiliary air passage aperture can be computed.

In two-cycle engines, the lower this temperature compared to the required temperature, the more one advances the exhaust timing by means of the exhaust timing valve to make the correction. The higher this temperature compared to the required temperature, the more one delays the exhaust timing to make the correction. So doing establishes a timing that matches that of the exhaust pulse wave reflection, and in addition, it also helps adjust the temperature to the desired temperature.

Next, the oxygen concentration information is used to determine the air/fuel ratio in the combustion chamber; when this is higher than the air/fuel ratio stored in memory (the target air/fuel ratio), then a correction is calculated to increase the amount of fuel injection.

On the other hand, when the air/fuel ratio is lower than that in memory (the target air/fuel ratio), the aperture of the auxiliary air passage is increased.

In cases where the temperature of the catalyst is lower than the required temperature (the optimal catalytic activity temperature), compensation is performed to increase the exhaust gas temperature. Just as was the case with the exhaust wall temperature, correction values for the ignition timing or the amount of fuel injection can be computed, or in some cases, the aperture of the auxiliary air passage can be adjusted. A corrected value for increasing the EGR adjustment valve aperture can also be calculated to increase the amount of EGR circulation.

Step S5: Computations of the degree of control are made based upon a comparison between the basic values determined in the foregoing steps S3 and S4 and the corrected values for the ignition timing, air/fuel ratio and fuel injection initiation timing.

Step S6: The ending timing for the fuel injection is determined from the control amount for the initiation of the fuel injection as determined in the foregoing step S3 and the control amount for the amount of fuel injection determined in S5.

Step S7: Determinations are made as shown below on whether or not the engine is in an abnormal operating condition. To wit, (a) Is the RPM level excessive based on the detected engine RPM in step S2? (b) Is the engine overheated based upon the engine temperature information detected in step S2? (c) Is the engine knocking based on detection of knocking information in step S2? (d) Is the engine oil empty based on the detection of the remaining oil information in step S2? If such an abnormality exists, the routine proceeds to step S8, if it does not, the routine goes to step S9.

Step S8: If any of the abnormal conditions exist, the ignition timing control amount is set to zero for a specific period of time. Since this will cause a certain percentage of ignition loss, the engine's RPM will decline.

Step S9: When there are no abnormalities, since control is exercised over the ignition and the fuel injection for each revolution based upon the subroutine in Figure 4, the computed results for the control amounts are fed into memory.

Step 510: The aperture of the EGR adjustment valve is set based upon the control amount.

Figure 4 is a flow chart showing a routine inserted into the main routine, or established as an independent subroutine, for each combustion cycle by each cylinder in the engine. In step S11, the basic crank angle signal is read and used subsequently as a standard for the sampling of the crank angle based upon the detection of the teeth in the ring gear. On the other hand, plus/minus pulses are detected as the teeth on the ring gear are passed, and this is used as the basis for storing the engine RPM into memory. This data in memory is utilized by the main routine. Next, the combustion chamber pressure data is read into memory at points corresponding to the above described six crank angles (Figure 2 a0 through a5) (step S12). Next, in step S13, the spark plug and the igniter are driven based upon the control values in memory (from step S9 of the main routine), with the firing taking place based upon the sampling of the crank angle by the crank angle sensor 11. Similarly, the fuel injection is initiated at the required timing and halted at the required timing. Next, in step S14, the indicated mean effective pressure PMIN is computed from the combustion pressure data in memory, and then the combustion rate qX and the heat generation QX are computed, and the results of these computations are stored in memory.

Further, the data stored in memory for the computed indicated mean effective pressure PIMN-1 is read from memory and the difference between that and the current PMIN is determined. This difference, $\Lambda$PMI = PMIN-PMIN-1, is stored in memory and the previous data PIM-1 is erased.

As described above, the PMI computation takes place on the basis of the combustion chamber pressure (P0 through P5) detections at 6 crank angles (a0 through a5) per each combustion cycle. The approximation equation is:

$$PMI = C + C1*(P1 - P0) + C2*(P2 - PO) + ... + C5*(Pn - P0)$$

As can be seen from the above equation, the PMI is expressed as the sum of a predetermined constant times the pressure readings. PO (the pressure data BDC) is, as described above, for offset output correction of the sensor due to drift, etc. The crank angle sampling angles would differ according to the type of engine, and the number of samples taken would differ according to the accuracy requirements. If the pressure (P1) is sampled prior to TDC and around the time of ignition, it is possible to improve the accuracy of the PMI that is computed. In this computation, the coefficient for the BTDC sample (P1) would be negative, and the sign of the coefficient for the ATDC samples (P2 through P5) would be positive. Minus indicates negative work and plus indicates positive work.

In the present embodiment, a0 - BDC, a1 = BTDC15°, a2 = TDC, a3 = ATDC15°, a3 = ATDC45°, a4 = ATDC75°, and a5 = ATDC105°. These remain fixed throughout the entire operating range, from low load to high load and from low speed to high speed.

The ignition timing is varied according to the load changes; at low loads it is 10°, at mid-range loads it is 25° and at full loads it is 5°. When the ignition precedes a1 as in the low load range and the full load range, the PMI may be calculated with the foregoing approximation equation after eliminating the c1*(p1 - p0) term.

In this case, the combustion rate would be computed up to a3 - ATDC15°.

Or, the a1' can be set to equal BTDC3°, and then the c to c5 changes can use a c' to c5' constant in computing the PMI. In this case, the combustion rate can be computed over the full load range, up to TDC.

It is possible to obtain a more accurate PMI using only one pressure detection point a1 at BTDC, if the pressure detection point a0 used for correcting the offset output due to drift is excluded.

It is also possible to have 2 or 3 detection points BTDC. This enables a more accurate calculation of the work load, and the more accurate calculation of the PMI. Accordingly, if there are not that many detection points, it is not necessary to use overly small teeth on the ring gear used to detect the crank angle, and it is still possible to detect the crank angle inexpensively and to a high degree of precision.

It is further possible to divide the load ranges up into low loads, mid-range loads, and full loads, and the engine rpm into low speed, mid-range speed, and high speed divisions, and use nine types of data a0N through a5N, C0N through C5N where N = 1 to 9, in order to compute the PMI.

Also, as described above, by determining the ΛPMI as the difference in the PMI with that of the previous cycle, the amount of fuel injection, the ignition timing, and the amount of EGR can be controlled using this difference to set the operating parameters. By decreasing the amount of fuel or increasing the amount of EGR, it is possible to expect better fuel economy or improved emissions, but on the other hand, combustion is liable to become unstable to the point where drivability is affected by the large fluctuations in output. In the methods of control used in the prior art, these output fluctuations were held in check by controlling the air/fuel ratio and the amount of EGR to preset values. However, the effects on combustion by the air/fuel ratio and the amount of EGR differs according to the usage environment, and it is necessary that the settings have a reasonability degree of latitude. In the present embodiment, the PMI fluctuations are monitored as an output equivalent, and this makes it possible to manipulate the air/fuel ratio and the EGR within the limits permitted with respect to output fluctuation. In this case, because control is exercised to reach the limit values, it is vital to have an understanding of the amount of control that is required. In the present embodiment, the fluctuation in the ΛPMI is used to perform this control at the limit values.

As described above, there is a negative coefficient applied to the pressure value before top dead center, and the work before top dead center is treated as the work load. By so doing, it is possible to handle any changes in the amount of air intake or in the combustion speed before combustion takes place before top dead center. Therefore, it becomes possible to predict the PMI over a broad operating range. The shaft torque can be computed based upon the PMI, the engine RPM, the diameter of the pistons and other engine dimensions, and the number of cylinders.

Figure 5 shows a structural diagram of this invention as applied to a two-stroke cycle engine. As with the four stroke-cycle engine shown in Figure 1, connecting rods 246 are connected to the crank shaft 241, and at the other end, the combustion chambers 248 are formed in the space between the pistons and the cylinder head. There is an engine RPM sensor 267 and a crank angle sensor 257 attached to the crankcase which detect the marks on the ring gear attached to the crank shaft and issue standard signals and detect the crank angle. Also attached to the crankcase is a crank chamber pressure sensor 210. An air/fuel mixture is conveyed into this crank chamber from the air intake manifold through the reed valve 228. An air/fuel mixture is conveyed to the air intake manifold through the throttle valve 204 of the carburetor and the air cleaner 231. An intake pressure sensor 211 is mounted in the air intake manifold on the downstream side of the throttle valve. The throttle valve 204 is operated by a grip 206 that is linked by a wire 205 to the throttle pulley 203. This grip 206 is attached to the steering handle bars 207, and an accelerator position sensor 202 is mounted at its base, 212 is a throttle aperture sensor.

There is a scavenging port 229 in the cylinder which connects the combustion chamber and the crank chamber by means of the scavenging passage 253 when the piston is in certain positions. There are also exhaust ports 254 in the cylinder which connect to the exhaust passage 253. There is an exhaust timing adjustment valve 264 installed in the exhaust passage wall in the vicinity of the exhaust port. The variable valve 264 is driven by the actuator 265 of a servo motor, etc. There is an exhaust pipe pressure sensor 213 and an exhaust pipe temperature sensor 223 mounted in the exhaust pipe that comprises the exhaust passage. Furthermore, the exhaust passage is equipped with an exhaust passage valve, which is driven by the actuator 282 from a servo motor, etc. The function of the exhaust passage valve is to improve the rotational stability by preventing blowby through the constriction during low speed operations.

A knocking sensor 201 is attached to the cylinder head, as are spark plugs and combustion chamber pressure sensors 200 which lie at the edge of the combustion chambers. The spark plugs are connected to an ignition control apparatus 256. The injectors 208 are attached to the cylinders' side walls. Fuel is conveyed to these injectors 208 by means of the fuel delivery lines 209.

Combustion gas chambers 279 are formed in the cylinder block which are linked by connecting holes 278 to the middle area of the exhaust ports near the exhaust port opening for the cylinder bore and the cylinder head on the cylinder block. These connecting holes are set to guide the foregoing combustion gas, which contains almost no blow-by gas, into the foregoing combustion gas chambers. There are $O_2$ sensors 277 attached to the inside of these combustion gas chambers that detect the oxygen concentration therein. In addition, check valves that are not shown are located at the entry to the combustion gas chambers and at the exit to the exhaust ports to prevent reverse flows in these areas.

Thus, drive control of the engine is exercised by a control unit 257 having a CPU 271. The inputs connected to this control unit 257 include the foregoing combustion chamber pressure sensors 200, the knocking sensor 201, the accelerator position sensor 202, the crank chamber pressure sensor 210, the air intake pipe pressure sensor 211, the throttle aperture sensor 212, the exhaust pipe pressure sensor 213, the crank angle detection sensor 258, the engine RPM sensor 267 and the $O_2$ sensor 277. The output side of the control unit 257 is connected to the injectors 208, the actuator 265 for the exhaust timing adjustment valve, the actuator 282 for the exhaust valve, and to the oil supply device (not shown).

Figure 6 is a graph of the combustion chamber pressure that shows the point of measurement of the pressure data to compute the shaft torque for the foregoing 2 cycle engine, and this graph is similar to the one (Figure 2) above for the four stroke-cycle engine. As described above, the combustion chamber pressure data sampling takes place at 6 crank angles. In the figure, the area inside the A range is the crank angle range for which the exhaust port is open, and the B range is that crank angle range for which the scavenging port is open. The sampling methods at the various crank angles (a0 to a5) and the methods of computation of essentially the same as used for the four stroke-cycle engine described above. However, the a0 is more delayed compared to the four stroke-cycle case, it is, for example, at BTDC135°. The a5 crank angle may then be advanced farther than for the case of four stroke-cycle engines, to ATDC 90°, for example. The embodiments of this invention could also have been adapted for engines employing a carburetor in the air intake passage for supplying fuel to the engine.

As described above, this invention allows the attainment of accurate PMI based upon computations from the combustion pressure data taken in the vicinity of ignition, before top dead center. Further, this PMI is used to control the amount of fuel injection, the ignition timing and to control EGR. It makes possible the simple, quick and accurate computation of the control amounts, thereby improving response and preventing engine output fluctuations, even when performing EGR and running the engine under high lean-burn conditions, and it enables the appropriate control of the ignition timing and the air/fuel ratio according to the combustion conditions and operational state of the engine.

Since the combustion rate at top dead center or at a specific crank angle near top dead center has great effect upon combustion fluctuation, according to the invention there are two methods for accurately calculating the combustion rate from measurements of the pressure in the combustion chamber. The combustion rate is defined as the rate of combustion of the fuel burned in one combustion cycle up to a certain crank angle. With regard to computing this combustion rate, one method is to use the combustion chamber pressure data that was taken at a plurality of points during one combustion cycle and use a first-order approximation equation; the other method would be to determine the combustion rate up to the desired crank angle (for example, top dead center) using samplings of heat production and a thermodynamic equation. Both methods yield calculated results that very closely approximate the real values. In this case, the combustion pressure data would be detected at a crank angle between the end of the exhaust stroke and the beginning of the compression stroke, at a crank angle at top dead center or a crank angle near top dead center, and at crank angles after top dead center and before the beginning of the exhaust stroke.

Spark ignition occurs after compression and before or after the top dead center. The pressure is then detected in the combustion chamber after ignition at top dead center or at a crank angle near top dead center. Later the pressure is detected in the combustion chamber, preferably at a plurality of points, after top dead center and before the beginning of the exhaust stroke. In diesel engines, the injection of fuel into the combustion chamber is commenced after compression and before top dead center, or after top dead center.

In other words, what is meant by the top dead center or a crank angle near top dead center, for the case of diesel engines is at a crank angle that is after, by a specific amount, the point where spontaneous ignition occurs.

When the combustion chamber pressure is detected in this way at a crank angle between the end of the exhaust stroke and the beginning of the compression stroke, at a crank angle at top dead center or a specific crank angle near top dead center, and at crank angles after top dead center and before the beginning of the exhaust stroke at least three points (6 points for example), a first-order approximation equation can be used to compute the combustion rate and the indicated mean effective pressure. These approximation equations are expressed as follows:

$$\text{Combustion rate: } qx = b + b1*(p1 - p0) + b2*(p2 - p0) + ... bn*(pn - p0)$$

$$\text{Indicated mean effective pressure: } pmi = c + c1*(p1-p0) + c2*(p2-p0) + ... cn*(pn- p0)$$

As is apparent from the above equations, qx is the sum of the products of predetermined constants b1 through bn multiplied by the pressure data p1 through pn from which the standard pressure p0 has been subtracted. Similarly, pmi is the sum of the products of predetermined constants c1 through cn multiplied by the pressure data p1 through pn from which the standard pressure p0 has been subtracted. Here, p0 is the pressure in the combustion chamber when it reaches the atmospheric pressure level (for example, near the BDC as described above), and it is subtracted from the various pressures p1 through pn in order to correct the pressure for sensor drift. P1 is the pressure in the combustion chamber at the top dead center or at a crank angle near the top dead center. Pn is the combustion chamber pressure after top dead center and before the crank angle where the exhaust stroke begins. P2 through pn -1 are either measured at the crank angles at or near top dead center, or the crank angles after top dead center and before the crank angle where the exhaust stroke begins. Thus, a simple first-order approximation equation can be used to compute, at a specific crank angle after ignition, an accurate value for the combustion rate which is almost the same as the actual value. Accordingly, by using this combustion rate as the basis for the control of the engine's ignition timing or air/fuel ratio, it is possible not only to get better energy efficiency from combustion, but to improve response, and to prevent output fluctuations by accurately following the operating state of the engine when performing EGR control under lean burn engine operations. It is further possible to prevent the generation of $NO_x$ emissions caused by the rapid advance of combustion.

With regard to the second computation method for the combustion rate, qx is computed using the heat generated between two pressure measurement points (crank angles) the pressure difference $\Lambda P$ between the two pressure measurement points, the volume difference $\Lambda V$ in the volume of the combustion chamber, where P and V are the first of the two pressure values and combustion chamber volume values that were measured, A is the heat equivalent, K is the specific heat ratio, R is the average gas constant, and P0 is the pressure at BDC:

$$\text{Heat generation: } Qx - A*R/(\kappa - 1)[(C\kappa + 1)/2*\Lambda P*\Lambda V + \kappa*(P-P0)*\Lambda V + V*\Lambda P]$$

The specific pressure measurement point up to where the combustion rate is measured should be selected as the crank angle where combustion is nearly complete. Similarly, a crank angle near the point of ignition would also be selected as a pressure measurement point. The calculation of the foregoing amount of heat generation Qx is performed by summing the values determined for each of the pressure measurement points, and with regard to the interval between the initial pressure measurement point to the specified pressure measurement point (the specific crank angle). Then the combustion rate is determined by summing for the foregoing Qx and then dividing; to wit:

Combustion rate:

qx = the amount of combustion heat up to the desired crank angle / all of the heat X 100 (%)

= (Q1 + Q2 + ... + Qx) / (Q1 + Q2 + ... + Qn) x 100

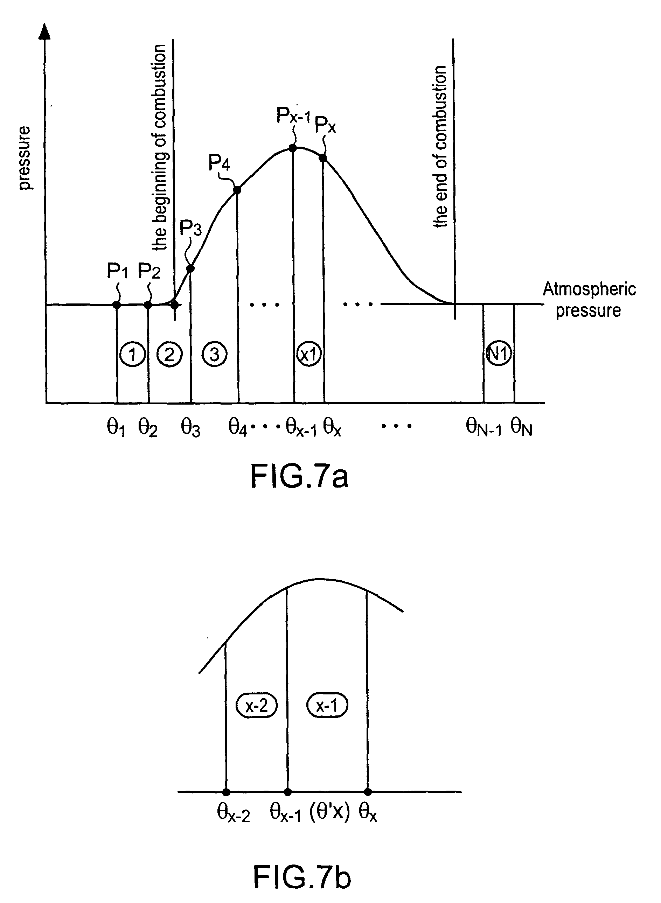

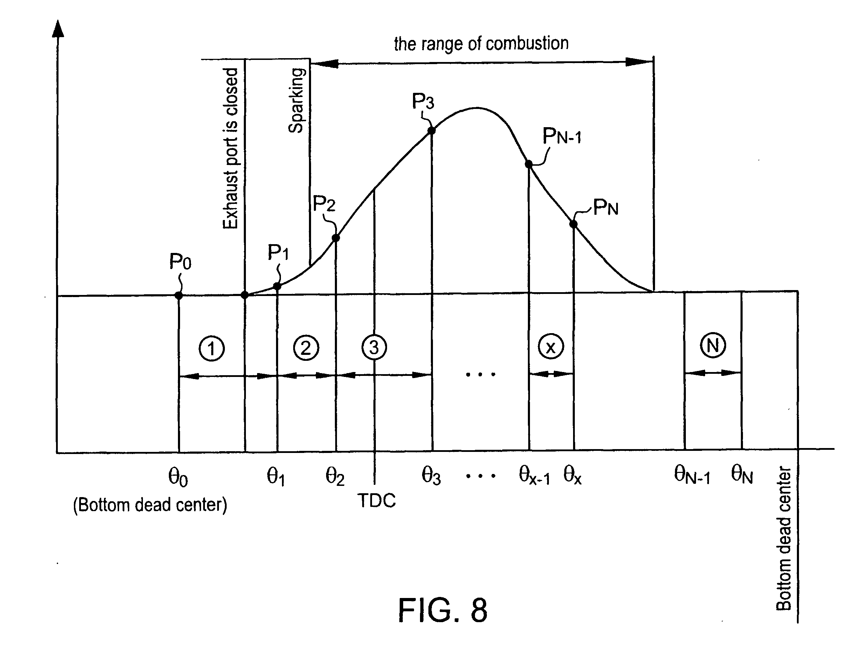

With reference to the figures 7a, 7b and 8 now will be given a short explanation how to receive the respective combustion rate data.

As can be seen from figure 7a, the total range number is N-1 which is 1 less than the number of crank angle points $\theta 1 \sim \theta N$.

Then the combustion rate of the crank angle of $\theta x$ is calculated by the equation:

$$\sum_{l=(z-1)} Q_y \bigg/ \sum_{l=(N-1)} Q_y$$

whereby Q1 is the heat generation between the crank angles $\theta 1$ and $\theta 2$.

As can be best seen from figure 7a, the heat generation between the crank angles $\theta 1$ and $\theta x$ is calculated by summing up or integrating of

$$(Q_1 + Q_2 + ..... Q_{r-1})$$

In addition the total heat generation can be calculated by summing up or integrating of

$$(Q_1 + Q_2 + ..... Q_{N-1})$$

this results in the combustion rate

$$g_z = \sum_{l}^{z-1} Q_y \bigg/ \sum_{l}^{N-1} Q_y$$

Also, as illustrated in figure 7a, the heat generation at the crank angle range ① which means between the crank angles $\theta 2$ and $\theta 1$ is 0.

This, in addition, is derivable from the formula

$$Q_y = \frac{AR}{K-1} \times \left( \frac{(K+1)}{2} \times \delta P \times \delta V + K \times (P_y - P_0) \times \delta V + V \times \delta P \right)$$

whereby

$$\delta P = 0 \qquad P_y - P_o = 0$$

Therefore, the crank angles measuring the pressures must be chosen at a wider range than the range of combustion.

In case the respective pressure is not measured, the combustion rate must be calculated by interpolation. This is best seen from figure 7b and also also derivable from the following equation:

$$g_{\theta'x} = \frac{\sum\limits_{1}^{x-2} Q_y + \dfrac{\theta'x - \theta x - 1}{\theta x - \theta x - 1} \times Q_{x-1}}{\sum\limits_{1}^{N-1} Q_y}$$

However, if the total number of measured crank angles is N+1, there is no need to change the formula. Figure 8 shows an example using a total number of N+1 for measuring said crank angles or combustion pressures, respectively.

When the total range number N is 1 less than the number of measuring crank angles, $\theta 0$, $\theta 1$ to $\theta N$, then the combustion rate of the crank angle of $\theta x$ is calculated according to fig. 8.

The above computation can be used to measure the combustion chamber pressure at a plurality of specific crank angles, and based upon that data, the combustion rate up to the desired crank angle can be accurately computed. Then, by using this combustion rate for engine control, it is possible to obtain stable output and engine RPM. The combustion pressure data that was used in computing the combustion rate can also be used as described above to accurately compute the indicated mean effective pressure at the same time. It is possible to obtain even more stable engine RPM and output by controlling the engine on the basis of both the combustion rate and the indicated mean effective pressure and obtain a high engine output with good fuel economy.

In the case of diesel engines which do not use spark ignition, fuel is injected near the top dead center as in EI. There is a delay $d$ interval after injection until ignition occurs naturally. The crank angle where natural ignition occurs is $S$.

The higher the combustion rate is beyond the target combustion rate, the more the control correction in the opposite direction. During low speed operations by diesel engines, the natural ignition can be delayed by delays in the fuel injection timing, and in gasoline engines, when the ignition timing is delayed, a target combustion rate, for example 20 to 30%, can be achieved by using data from memory that has been previously confirmed to stabilize combustion at a specific crank angle, 10 to 30° for example, after ignition.

Spark ignition takes place either before or after the top dead center, after compression. The pressure in the combustion chamber is then detected at the top dead center or at a crank angle near the top dead center after ignition has occurred. It is preferable to also detect the pressure in the combustion chamber after top dead center, and before the beginning of the exhaust stroke, at a plurality of points. In diesel engines, the fuel injection into the combustion chamber is begun after compression either before or after the top dead center, and natural combustion takes place shortly thereafter.

With regard to b0n to b5n as well, it is also possible to compute qx based upon 9 sets of data, n = 1 to 9.

Further, as explained above, fuel injection control and the amount of EGR control can be performed by determining the difference between the PMI of the current cycle and that of the previous cycle as $\Lambda$PMI, and using it as the operating parameter to approximate the target values. By reducing the amount of fuel or increasing the amount of EGR, better fuel economy and improved exhaust gas emissions could be expected, but such measures can lead to unstable combustion and significant fluctuations in output which can adversely affect drivability. Thus, the $\Lambda$PMI can

be used within permissible limits for operations to adjust both of these parameters. Prior art control methods controlled the air/fuel ratio and the amount of EGR to predetermined settings in order to hold down fluctuations in output. However, the effects of the air/fuel ratio and the amount of EGR on combustion differ according to the usage environment, and considerable latitude in the settings must be allowed. In this invention, however, the PMI, which is equivalent to output, is monitored and then used to control the air/fuel ratio and the EGR within the permissible limits for output fluctuation. In this case, because these are controlled as far as the limit values, it is necessary to understand the control operations required to reach these limits. In the present invention, the ΛPMI fluctuations are used to constantly perform control to the limit values.

With regard to the combustion rate as well, the combustion rate for each cycle is computed and used as a control parameter to obtain a combustion rate at a specific crank angle that closely matches the target combustion rate. The actual combustion rate can be computed on the basis of the combustion pressures, and this value is used as a control parameter to match the target combustion rate using feedback. Thus, the combustion rate is determined by the ignition interval and the combustion speed. The ignition period can be controlled by the spark timing. The actual ignition timing and the combustion speed can vary depending upon the air/fuel ratio because some mixtures burn more readily than others.

Some of the factors which can make the air/fuel mixture more difficult to burn include performing EGR during lean burn operations, residual combustion gases in the cylinder (auto-EGR), low cylinder wall temperature (at starting) and too low of air/fuel volume (under low loads), etc. It is however possible to correct amount of fuel at ignition and the amount of EGR while taking these tendencies into consideration and attain the target combustion rate. Further, it is possible to observe the leaning phenomenon that happens when the accelerator is rapidly opened by looking at the delay in the combustion rate, therefore it is possible to immediately provide the optimal air/fuel ratio.

As was described above, the present invention computes the combustion rate from sampling the pressure data in the engine combustion chambers in the area of ignition prior to top dead center, and, based upon that, controls the ignition timing, the fuel injection, or the EGR, thereby enabling the efficient use of the energy from combustion, the realization of higher efficiency with respect to the input (fuel) and the output (torque), and better mechanical stability.

Further, it is possible to compute an accurate control step in a short period of time, which improves response characteristics. In addition, by further computing the indicated mean effective pressure and using computed values to control engine operations, it is possible to hold down fluctuations in engine output during lean-burn operations employing a high air/fuel ratio, even if EGR, a frequent cause of output fluctuation, is being performed, thereby appropriately controlling the ignition timing and the air/fuel ratio according to the combustion conditions and operating conditions.

**Claims**

1. Method of controlling the operation of an internal combustion engine on the basis of at least one detected combustion chamber pressure, wherein at least a combustion chamber pressure is detected at a crank angle between the end of an exhaust stroke and the beginning of the compression stroke of a piston, and/or at crank angles close to or at a top dead center position of the piston, and at crank angles after said top dead center position and before the beginning of the successive exhaust stroke of said piston, using said combustion chamber pressure data for controlling the engine operation, **characterized in that** the actual combustion rate is calculated on the basis of said combustion chamber pressures and that this value is used as a control parameter to match a predetermined target combustion rate by using feedback control.

2. Method according to claim 1, **characterized in that** said combustion chamber pressure data is used to calculate the engine output in terms of the indicated mean effective pressure (PMI) at a desired crank angle up to or close to the top dead center position of said piston.

3. Method according to claim 2, **characterized in that** said indicated mean pressure (PMI) is calculated by use of the following approximation equation:

$$PMI = c + \sum_{1-n} c_n(P_n - PO)$$

whereas c and $c_n$ are predetermined constants, PO is the combustion chamber pressure when it reaches substantially atmospheric pressure level and $P_n$ are the respective detected combustion chamber pressures.

**4.** Method according to claim 1, **characterized in that** said combustion chamber pressure data is used to calculate the combustion rate at the top dead center position or at a specific crank angle close to said top dead center position.

**5.** Method according to claim 4 **characterized in that** said combustion rate is calculated by use of the following approximation equation:

$$qx = b + \sum_{1-n} bn\ (Pn-PO)$$

whereas b and bn are predetermined constants, PO is the standard pressure and Pn are the respective detected combustion chamber pressures.

**6.** Method according to claim 4, **characterized in that** said combustion rate is calculated by use of the following equation:

$$qx = \sum_{1-x} Qx / \sum_{1-n} Q_n \cdot 100$$

whereas Qx is the amount of combustion heat up to a desired crank angle derivable from the following equation:

$$Q_x = \frac{A \cdot R}{(x-1)} \cdot \left[ \frac{x-1}{2} \cdot \delta P \cdot \delta V + x\ (P-P_o) \cdot \delta V + V \delta P \right]$$

whereas A is the heat equivalent, $\kappa$ is the specific heat ratio, R is the general gas constant, PO is the combustion chamber pressure at the bottom dead center position of said piston, $\delta P$ is the pressure difference between two pressure measurement points, $\delta V$ is the volume difference of the combustion chamber volume between two measurement points and Px and Vx are the first of the two measured pressure and combustion chamber volume values, and Qn is the total heat.

**7.** Method according to claims 3, 5 and 6, **characterized in that** both the combustion rate (qx) and the indicated mean pressure (PMI) are used to control the engine output.

**8.** Method according to one of claims 1 to 7, **characterized in that** said combustion chamber pressures are detected at at least six (n $\geq$ 6) different crank angles (a0-a5).

**9.** Method according to one of claims 1 to 8, **characterized in that** said engine operations to be controlled are the ignition timing, the fuel injection or the exhaust gas recirculation (EGR).

**10.** Method according to claim 8, **characterized in that** said crank angles are used whereas the first (a0) is the crank angle when the piston is at its bottom dead center position (BDC), the second (a1) is a crank angle after the ignition but before the top dead center position (TDC) of said piston, and the third through sixth (a2-a5) are crank angles after the top dead center position within the power stroke of said piston.

**11.** Method according to one of claims 2 to 10, **characterized in that** said indicated mean effective pressure (PMI) is calculated and then stored in a memory and that this stored value is used for a comparison with the indicated mean effective pressure of the following cycle to obtain correction values when the following indicated mean effective pressure (PMI) has increased or to store the indicated mean effective pressure (PMI) into the memory for a comparison with the further following indicated mean effective pressure (PMI) when it has decreased of that of the previous cycle.

**12.** Method according to one of claims 1 to 11, whereas said engine comprises at least one spark plug, **characterized in that** an air/fuel mixture inside the combustion chamber is ignited by said spark plug at a crank angle between the end of the previous exhaust stroke and the beginning of the compression stroke.

13. Method according to claim 12, **characterized in that** said ignition takes place at a crank angle which before the crank angle of the top dead center position of said piston or a specific crank angle close to the top dead center of position of said piston.

14. Internal combustion engine comprising at least one cylinder unit (3) accommodating a slidingly reciprocable piston (7) connected to a crankshaft (9; 241), an engine speed detector (11; 258), a crank angle detector (11; 267) and a combustion chamber pressure detector, in particular for performing the method of claim 1, wherein a control device (12; 257) which, based on the supplied signals of said various detectors, is capable of calculating the control steps for the ignition timing and fuel injection by calculating the combustion rate and/or the indicated mean effective pressure (PMI) on the basis of a combustion chamber pressure detected at a crank angle between the end of an exhaust stroke and the beginning of the compression stroke of a piston, and/or at crank angles close to or at a top dead center position of the piston, and at crank angles after said top dead center position and before the beginning of the successive exhaust stroke of said piston and using said combustion chamber pressure data for controlling the engine operation, said control device (12;57) being further capable to calculate the actual combustion rate on the basis of said combustion chamber pressures and that this value is used as a control parameter to match a predetermined target combustion rate by using feedback control.

**Patentansprüche**

1. Verfahren der Steuerung des Betriebes einer Brennkraftmaschine auf der Grundlage zumindest eines erfaßten Brennkammerdruckes, wobei zumindest ein Brennkammerdruck an einem Kurbelwinkel zwischen dem Ende des Auslaßhubes und dem Beginn des Verdichtungshubes eines Kolbens erfaßt wird, und / oder bei Kurbelwinkeln nahe bei oder an dem oberen Totpunkt des Kolbens und bei Kurbelwinkeln nach dem Totpunkt und vor dem Beginn des folgenden Auslaßhubes des Kolbens, das die Brennkammerdruckdaten zum Steuern des Motorbetriebes verwendet, **dadurch gekennzeichnet, daß** die tatsächliche Verbrennungsgeschwindigkeit auf der Grundlage des Brennkammerdruckes berechnet wird und daß dieser Wert als ein Steuerparameter verwendet wird, um eine vorbestimmte Ziel- Verbrennungsgeschwindigkeit zu erreichen, unter Verwenden einer Rückkopplungssteuerung.

2. Verfahren nach Anspruch 1, **dadurch gekennzeichnet, daß** die Brennkammerdruckdaten verwendet werden, um die Motorausgangsleistung in Einheiten des angezeigten, mittleren effektiven Druckes (PMI) bei einem gewünschten Kurbelwinkel bis zu oder nahe zu dem oberen Totpunkt des Kolbens zu berechnen.

3. Verfahren nach Anspruch 2, **dadurch gekennzeichnet, daß** der angezeigte, mittlere Druck (PMI) durch Verwendung der folgenden Näherungsgleichung berechnet wird:

$$PMI = c + \sum_{1\text{-}n} c_n (P_n - P_O)$$

während c und c_n vorbestimmte Konstanten sind, P_O der Brennkammerdruck ist, wenn er im wesentlichen athmosphärisches Druckniveau erreicht und P_n sind die jeweiligen erfaßten Brennkammerdrücke.

4. Verfahren nach Anspruch 1, **dadurch gekennzeichnet, daß** die Brennkammedruckdaten verwendet werden, um die Verbrennungsgeschwindigkeit an dem oberen Totpunkt oder bei einem speziellen Kurbelwinkel nahe dem oberen Totpunkt zu berechnen.

5. Verfahren nach Anspruch 4, **dadurch gekennzeichnet, daß** die Verbrennungsgeschwindigkeit durch Verwendung der folgenden Näherungsgleichung berechnet wird:

$$qx = b \sum_{1-n} bn (Pn - PO)$$

wobei b und bn vorbestimmte Konstanten sind, ist PO der Standarddruck und Pn die jeweiligen erfaßten Brennkammerdrücke sind.

6. Verfahren nach Anspruch 4, **dadurch gekennzeichnet, daß** die Verbrennungsgeschwindigkeit durch Verwendung der folgenden Näherungsgleichung berechnet wird:

$$qx = \sum_{1-x} Qx \,/\, \sum_{1-n} Q_n \,.\, 100$$

wobei Qx der Betrag der Verbrennungswärme bis zu einem gewünschten Kurbelwinkel, ableitbar von der folgenden Näherungsgleichung, ist:

$$Qx = \frac{A \bullet R}{(x-1)} \bullet \left[ \frac{x-1}{2} \bullet \delta P \bullet \delta V + x(P - Po) \bullet \delta V + V \delta P \right]$$

wobei A das Wärmeäquivalent ist, k das spezifische Wärmeverhältnis ist, R die allgemeine Gaskonstante ist, PO ist der Brennkammerdruck am unteren Totpunkt des Kolbens ist, $\delta P$ die Druckdifferenz zwischen zwei druckpunkten ist, $\delta V$ der Volumenunterschied des Brennkammervolumens zwischen zwei Meßpunkten ist und Px und Vx der erste der zwei gemessenen Druck- und Brennkammer- Volumenwerte ist, und Qn die Gesamtwärme ist.

7. Verfahren nach den Ansprüchen 3, 5 und 6, **dadurch gekennzeichnet, daß** sowohl die Verbrennungsgeschwindigkeit (qx), als auch der angezeigte mittlere Druck (PMI) verwendet werden, um die Motorausgangsleistung zu steuern.

8. Verfahren nach einem der Ansprüche 1 bis **7, dadurch gekennzeichnet, daß** die Brennkammerdrücke bei zumindest sechs (n ≥ 6) unterschiedlichen Kurbelwinkeln (a0 - a5) erfaßt werden.

9. Verfahren nach einem der Ansprüche 1 bis 8, **dadurch gekennzeichnet, daß** die Motorbetriebsweisen, die gesteuert werden sollen, der Zündzeitpunkt, die Kraftstoffeinspritzung oder die Abgasrückführung (EGR) sind.

10. Verfahren nach 8, **dadurch gekennzeichnet, daß** die Kurbelwinkel verwendet werden, wobei der erste (a0) der Kurbelwinkel ist, wenn der Kolben an seinem unteren Totpunkt (BDC) ist, der zweite (a1) ein Kurbelwinkel nach der Zündung, aber vor dem oberen Totpunkt (TDC) des Kolbens ist, und der dritte bis sechste (a2 - a5) Kurbelwinkel nach dem oberen Totpunkt innerhalb des Arbeitshubes des Kolbens sind.

11. Verfahren nach einem der Ansprüche 2 bis 10, **dadurch gekennzeichnet, daß** der angezeigte, mittlere effektive Druck (PMI) berechnet wird und dann in einem Speicher gespeichert wird und daß dieser gespeicherte Wert für einen Vergleich mit dem angezeigten, mittleren effektiven Druck des folgenden Taktes verwendet wird, um Korrekturwerte zu erhalten, wenn der folgende angezeigte mittlere effektive Druck (PMI) zugenommen hat oder um den angezeigten, mittleren effektiven Druck (PMI) in dem Speicher für einen Vergleich mit dem weiteren folgenden angezeigten, mittleren effektiven Druck (PMI) zu speichern, wenn er sich von jenem des vorhergehenden Taktes verringert hat.

12. Verfahren nach einem der Ansprüche 1 bis 11, wobei der Motor zumindest eine Zündkerze aufweist, **dadurch gekennzeichnet, daß** ein Kraftstoff- / Luftgemisch im Inneren der Brennkammer bei einem Kurbelwinkel zwischen dem Ende des vorhergehenden Auslaßhubes und dem Beginn des Verdichtungshubes durch die Zündkerze gezündet wird.

**13.** Verfahren nach Anspruch 12, **dadurch gekennzeichnet, daß** die Zündung bei einem Kurbelwinkel stattfindet, der vor dem Kurbelwinkel des oberen Totpunktes des Kolben oder eines bestimmten Kurbelwinkels nahe des oberen Totpunktes des Kolbens liegt.

**14.** Brennkraftmaschine mit zumindest einer Zylindereinheit (3), die einen gleitenden hinund hergehenden Kolben (7) aufnimmt, verbunden mit einer Kurbelwelle (9; 241), einem Motordrehzahlerfasser (11; 258), einem Kurbelwinkelerfasser (11; 267) und einem Brennkammerdruckerfasser, insbesondere zum Ausführen des Verfahrens von Anspruch 1, wobei eine Steuervorrichtung (12; 257), auf der Grundlage der zugeführten Signale von den verschiedenen Detektoren, in der Lage ist, die Steuerschritte für den Zündzeitpunkt und die Kraftstoffeinspritzung durch Berechnen der Verbrennungsgeschwindigkeit und / oder des angezeigten mittleren, effektiven Druckes (PMI) zu berechnen, auf der Grundlage eines Brennkammerdruckes, erfaßt durch einen Kurbelwinkel zwischen dem Ende eines Auslaßhubes und dem Beginn des Verdichtungshubes eines Kolbens, und / oder bei Kurbelwinkeln nahe zu oder an einer oberen Totpunktposition des Kolbens, und bei Kurbelwinkeln nach der oberen Totpunktposition und vor dem Beginn des folgenden Ausfaßhubes des Kolbens und die die Brennkammerdruckdaten zum Steuern der Motorbetriebsweise verwendet, wobei die Steuervorrichtung (12; 257) außerdem in der Lage ist, die tatsächliche Verbrennungsgeschwindigkeit auf der Grundlage des Brennkammerdruckes zu berechnen und daß dieser Wert als ein Steuerparameter verwendet wird, um eine vorbestimmte Ziel- Verbrennungsgeschwindigkeit zu erreichen, unter Verwenden einer Rückkopplungssteuerung.

## Revendications

**1.** Méthode pour commander le fonctionnement d'un moteur à combustion interne sur la base d'au moins une pression de chambre de combustion détectée, dans laquelle au moins une pression de chambre de combustion est détectée à un angle de calage compris entre la fin d'une course d'échappement et le début de la course de compression d'un piston, et/ou à des angles de calage à une position de point mort haut du piston ou proche de cette position, et à des angles de calage postérieurs à ladite position de point mort haut et antérieurs au début de la course d'échappement suivante dudit piston, en utilisant lesdites données de pressions de chambre de combustion pour commander le fonctionnement du moteur, **caractérisée en ce que** la vitesse de combustion réelle est calculée sur la base desdites pressions de chambre de combustion et **en ce que** cette valeur est utilisée en tant que paramètre de commande permettant de parvenir à une vitesse de combustion cible prédéterminée en utilisant une commande asservie.

**2.** Méthode selon la revendication 1, **caractérisée en ce que** lesdites données de pressions de chambre de combustion sont utilisées pour calculer la puissance fournie par le moteur en termes de la pression effective moyenne indiquée (PMI) à un angle de calage désiré atteignant la position de point mort haut dudit piston ou proche de cette position.

**3.** Méthode selon la revendication 2, **caractérisée en ce que** ladite pression moyenne indiquée (PMI) est calculée grâce à l'emploi de l'équation d'approximation suivante :

$$PMI = c + \sum_{1-n} cn\,(Pn - PO)$$

où c et cn sont des constantes prédéterminées, PO est la pression de chambre de combustion lorsqu'elle atteint sensiblement le niveau de la pression atmosphérique, et Pn désignent les pressions de chambre de combustion détectées respectives.

**4.** Méthode selon la revendication 1, **caractérisée en ce que** lesdites données de pressions de chambre de combustion sont utilisées pour calculer la vitesse de combustion à la position de point mort haut ou à un angle de calage spécifique proche de ladite position de point mort haut.

**5.** Méthode selon la revendication 4, **caractérisée en ce que** ladite vitesse de combustion est calculée grâce à l'emploi de l'équation d'approximation suivante :

$$qx = b + \sum_{1-n} bn \, (Pn - PO)$$

où b et bn sont des constantes prédéterminées, PO est la pression standard et Pn désignent les pressions de chambre de combustion détectées respectives.

**6.** Méthode selon la revendication 4, **caractérisée en ce que** ladite vitesse de combustion est calculée grâce à l'emploi de l'équation suivante :

$$qx = \sum_{1-x} Qx / \sum_{1-n} Qn \bullet 100$$

où Qx est la quantité de chaleur de combustion jusqu'à un angle de calage désiré, pouvant être tirée de l'équation suivante :

$$Qx = \frac{A \bullet R}{(x-1)} \bullet \left[ \frac{x-1}{2} \bullet \delta P \bullet \delta V + x(P - Po) \bullet \delta V + V \delta P \right]$$

où A est l'équivalent mécanique de la chaleur, $\kappa$ est le rapport de chaleur massique, R est la constante générale des gaz, PO est la pression de chambre de combustion à la position de point mort bas dudit piston, $\delta P$ est la différence de pression entre deux points de mesure de la pression, $\delta V$ est la différence de volume du volume de la chambre de combustion entre deux points de mesure, et Px et Vx sont les premières des deux valeurs de la pression et du volume de la chambre de combustion mesurées, et Qn est la chaleur totale.

**7.** Méthode selon les revendications 3, 5 et 6, **caractérisée en ce que** la vitesse de combustion (qx) et la pression moyenne indiquée (PMI) sont toutes deux utilisées pour commander la puissance fournie par le moteur.

**8.** Méthode selon l'une des revendications 1 à 7, **caractérisée en ce que** lesdites pressions de chambre de combustion sont détectées à au moins six (n ≥ 6) angles de calage différents (a0-a5).

**9.** Méthode selon l'une des revendications 1 à 8, **caractérisée en ce que** lesdits fonctionnements du moteur devant être commandés sont la distribution d'allumage, l'injection de carburant ou la recirculation des gaz d'échappement (EGR).

**10.** Méthode selon la revendication 8, **caractérisée en ce que** lesdits angles de calage sont utilisés tandis que le premier (a0) est l'angle de calage au moment où le piston se trouve à la position de point mort bas (BDC), le second (a1) est un angle de calage postérieur à l'allumage mais antérieur à la position de point mort haut (TDC) dudit piston, et les troisième au sixième (a2-a5) sont des angles de calage postérieurs à la position de point mort haut pendant la course de détente dudit piston.

**11.** Méthode selon l'une des revendications 2 à 10, **caractérisée en ce que** ladite pression effective moyenne indiquée (PMI) est calculée, puis est mémorisée dans une mémoire, et **en ce que** cette valeur mémorisée est utilisée en vue d'une comparaison avec la pression effective moyenne indiquée du cycle suivant afin d'obtenir des valeurs de correction lorsque la pression effective moyenne indiquée(PMI) suivante s'est accrue, ou bien pour mémoriser la pression effective moyenne indiquée (PMI) dans la mémoire en vue d'une comparaison avec la pression effective moyenne indiquée(PMI) suivante ultérieure lorsqu'elle a diminué par rapport à celle du cycle précédent.

**12.** Méthode selon l'une des revendications 1 à 11, tandis que ledit moteur comprend au moins une bougie d'allumage, **caractérisée en ce qu'**un mélange air/carburant au sein de la chambre de combustion est allumé par ladite bougie d'allumage à un angle de calage compris entre la fin de la course d'échappement précédente et le début de la course de compression.

**13.** Méthode selon la revendication 12, **caractérisée en ce que** ledit allumage survient à un angle de calage qui est antérieur à l'angle de calage de la position de point mort haut dudit piston, ou à un angle de calage spécifique proche du point mort haut de la position dudit piston.

14. Moteur à combustion interne, comprenant au moins une unité de cylindre (3) logeant un piston animé d'un mouvement de va et vient par coulissement (7) et raccordé à un vilebrequin (9 ; 241), un détecteur de vitesse de moteur (11 ; 258), un détecteur d'angle de calage (11 ; 267) et un détecteur de pression de chambre de combustion, en particulier pour mettre en oeuvre la méthode selon la revendication 1, dans lequel un dispositif de commande (12 ; 257) qui, sur la base des signaux reçus en provenance desdits divers détecteurs, est apte à calculer les étapes de commande relatives à la distribution d'allumage et à l'injection de carburant en calculant la vitesse de combustion et/ou la pression effective moyenne indiquée (PMI) sur la base d'une pression de chambre de combustion détectée à un angle de calage compris entre la fin d'une course d'échappement et le début de la course de compression d'un piston, et/ou à des angles de calage à une position de point mort haut du piston ou proches de cette position, et à des angles de calage postérieurs à ladite position de point mort haut et antérieurs au début de la course d'échappement suivante dudit piston, et en utilisant lesdites données de pressions de chambre de combustion pour commander le fonctionnement du moteur, ledit dispositif de commande (12 ; 57) étant, en outre, capable de calculer la vitesse de combustion réelle sur la base desdites pressions de chambre de combustion, cette valeur étant utilisée en tant que paramètre de commande pour parvenir à un taux de combustion cible prédéterminé en utilisant une commande asservie.

FIG. 1

Air intake temperature information

Air intake volume information

Throttle aperture information

Fuel injection control signal

Combustion chamber pressure signal

Ignition signal

Control unit

12

Oxygen concentration information

Key switch

43

Temperature information

150

Catalyst

23

to 12

120

Muffler

24

engine RPM information

air intake pipe pressure information

152

from 12

151

from 12

37

38

100

107

101

102

103

106

105

104

101a

35

36

34

29

32

28

33

31

30

16

5

6

17

15

18

26

3

13

7

8

9

10

11

2

25

22

4

P

19

EP 0 742 359 B1

FIG. 2

EP 0 742 359 B1

# FIG. 3

**// Main routine //**

**( Start )** S1

Main switch off? ──── YES ──→ **Stop**

NO

**Samplings by the various sensors under various operating conditions** ── S2

- engine RPM information
- throttle aperture information
- (air intake volume information)
- air intake temperature information
- engine temperature information
- air intake negative pressure information
- combustion chamber pressure information
- knocking information
- catalyst temperature information
- remaining oil information
- exhaust pipe wall temperature information

**Mapped Computation of the Basic Control amount volumes** ── S3

- ignition timing, air/fuel ratio (amount of injection, aperture of aux. air passage)
- Initial injection timing, EGR adjustment valve aperture, target air/fuel ratio.
  The below items are added for two-cycle engines
- exhaust timing (compression ratio) variable valve, exhaust passage valve

**Computation of the corrections to the control amounts** ── S4

1. Correction for the intake air temperature
2. Correction for the indicated mean effective pressure fluctuation
2'. Correction for the absolute indicated mean effective pressure
3. Correction for the combustion rate
4. Correction for the exhaust pipe wall temperature
5. Correction for the oxygen temperature
6. Correction for the catalyst temperature

**First computation of the control amounts** ── S5

- basic value + correction: ignition timing, air/fuel ratio (amount of fuel injection
  and aperture of the auxiliary air passage)
  The items below are added for two-cycle engines
- Exhaust timing (compression ratio) variable valve

**Second computation of control amounts** ── S6
- Computation of the end timing for fuel injection

**Determination of presence or absence of abnormalities** ── S7

Abnormal ──→ **Control amounts computed based on abnormal control amount map** ── S8

None

**Computed control amounts stored in Memory** ── S9

**Control based upon controlling the aperture of the EGR adjustment valve** ── S10
Control amounts for the actuator on two-cycle engines
- Exhaust timing (compression ratio) variable valve

```
            ╱╱  Sub-routine  ╱╱
```

| Sampling of standard crank angle signals, computation of engine RPM from crank angle signals, and storage of results in memory | ~S11 |

| Sampling the combustion pressure data at the specified crank angles, and storage of the results in memory | ~S12 |

| Based upon the control amounts in memory set:<br>the required ignition timing<br>the required initiation timing for fuel injection<br>the required cut off timing for fuel injection | ~S13 |

| Calculation of the indicated mean effective pressure Pmi N from the combustion chamber pressure data in memory, computation of the combustion rate qx, computation of the heat generation Qx, and storage of the results in memory.<br><br>From the Pmi N-1 of the previous cycle, compute APmi = Pmi N - Pmi N-1, and storage of the results in memory an erasing the Pmi N-1 data from memory. | ~S14 |

# FIG. 4

FIG. 5

EP 0 742 359 B1

FIG. 6

FIG.7a

FIG.7b

FIG. 8

EP 0 742 359 B1